Europäisches Patentamt

European Patent Office

Office européen des brevets

(11) Veröffentlichungsnummer: **0 206 022 B1**

# EUROPÄISCHE PATENTSCHRIFT

(45) Veröffentlichungstag der Patentschrift: **08.04.92**

(21) Anmeldenummer: **86107574.5**

(22) Anmeldetag: **04.06.86**

(51) Int. Cl.⁵: **C01B 25/46**, C22B 7/00

(54) **Verfahren zur Aufarbeitung von schwermetallhaltigen Rückständen aus der Reinigung von Rohphosphorsäuren.**

(30) Priorität: **26.06.85 DE 3522822**

(43) Veröffentlichungstag der Anmeldung:
**30.12.86 Patentblatt 86/52**

(45) Bekanntmachung des Hinweises auf die
Patenterteilung:
**08.04.92 Patentblatt 92/15**

(84) Benannte Vertragsstaaten:
**AT BE CH DE FR GB IT LI NL SE**

(56) Entgegenhaltungen:
**EP-A- 0 017 741        EP-A- 0 074 503**
**EP-A- 0 085 343        EP-A- 0 085 344**
**EP-A- 0 091 043        EP-A- 0 099 514**
**EP-A- 0 189 062**

(73) Patentinhaber: **HOECHST AKTIENGESELL-
SCHAFT
Postfach 80 03 20
W-6230 Frankfurt am Main 80(DE)**

(72) Erfinder: **Schimmel, Günther, Dr.
Ehrenstrasse 16
W-5042 Erftstadt(DE)**
Erfinder: **Gradl, Reinhard, Dr.
Heimbacher Weg 27
W-5042 Erftstadt(DE)**
Erfinder: **Kolkmann, Friedrich, Dr.
Tiergartenstrasse 22e
W-5040 Brühl(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Aufarbeitung, insbesondere zur Aufkonzentrierung, von schwermetallhaltigen Rückständen, welche bei der extraktiven Reinigung von Rohphosphorsäuren mit Dialkyldithiophosphorsäureestern und einem Adsorptionsmittel anfallen.

Die Entfernung von Schwermetallen, insbesondere Cadmium, aus Phosphorsäuren wird aus ökologischen Gründen immer wichtiger, denn über die aus Phosphorsäure hergestellten Folgeprodukte, insbesondere Mineraldünger, können die Schwermetalle in die menschliche Nahrungskette gelangen.

Zu diesem Zweck sind daher bereits eine Reihe von Verfahren bekannt, nach denen man durch eine Behandlung der Rohphosphorsäure mit Dialkyldithiophosphorsäureester in Verbindung mit feinteiligen Adsorptionsmitteln eine von Schwermetallen im wesentlichen befreite Phosohorsäure erhält (EP-0 085 344 A2, EP-0 099 514 A1, DE-32 12 675 A1).

Dabei fällt ein schwermetallhaltiger Rückstand, i. a. als Filterkuchen, an, der eine sehr unterschiedliche Zusammensetzung haben kann, welche von folgenden Parametern abhängt:

1) Gehalt an organischen Verunreinigungen der Rohsäure,
2) Schwermetallgehalt der Rohsäure,
3) Menge des eingesetzten Dialkyldithiophosphorsäureesters,
4) Art und Menge des Adsorptionsmittels und
5) Grad der Waschung des Filterkuchens und damit Menge der annaftenden Phosphorsäure.

Die mengenmäßige Zusammensetzung solcher Rückstände kann in weiten Grenzen schwanken und hängt davon ab, auf welche Weise die Reinigung der Rohphosphorsäuren durchgeführt wird.

So erhält man z.B. Rückstände mit relativ hohen Gehalten an Schwermetallen und organischer Substanz, wenn man die Rohsäure mit unverdünntem Dialkyldithiophosphorsäureester extrahiert, dann, nach Abtrennen der schwermetallhaltigen Esterphase, die Phosphorsäure zur Entfernung kleiner Reste des Extraktionsmittels mit einer entsprechend geringen Menge an Adsorptionsmittel versetzt, filtriert und den anfallenden Filterkuchen mit der vorher abgetrennten Esterphase vermengt, wobei ein relativ festes Gemisch ensteht.

Schließlich ist aus der EP-0 189 062 A2, die als Stand der Technik im Sinne des Artikels 54 (3) in Verbindung mit Artikel 56, Seite 2 EPÜ anzusehen ist, ein Verfahren zur Überführung von bei der Entfernung von Schwermetallen aus Naßphosphorsäure mit Dialkyldithiophosphorsäuren und ggf. einem Adsorptionsmittel anfallenden schwermetallhaltigen Rückständen in feste, deponiefähige Produkte bekannt geworden. Bei diesem Verfahren werden die von der gereinigten Phosphorsäure abgetrennten schwermetallhaltigen Rückstände mit einer solchen Menge von festen, basisch reagierenden Substanzen intensiv vermischt, daß eine 20 %ige wäßrige Suspension des entstandenen Produktes einen pH-Wert von 5 bis 12 aufweist.

Aufgabe der vorliegenden Erfindung war es, einen Weg zur Aufarbeitung solcher und anderer schwermetallhaltiger Rückstände zu finden, welche ganz allgemein bei der extraktiven Reinigung von Rohphosphorsäuren mit Dialkyldithiophosphorsäureestern in Verbindung mit Adsorptionsmitteln anfallen, wobei diese Rückstände im wesentlichen aus diesen Estern und Adsorptionsmitteln bestehen. Vor allem war es das Ziel, sowohl die in den Rückständen enthaltenen Schwermetalle abzutrennen und zu konzentrieren, um sie z.B. in wirtschaftlicher Weise zur Metallgewinnung einzusetzen oder in einer Sondermülldeponie unter Beanspruchung von wenig Stauraum zu deponieren, als auch die übrigen Rückstandskomponenten in das Reinigungsverfahren der Rohphosohorsäure recyclieren zu können.

Überraschenderweise wurde gefunden, daß sich diese Aufgabe lösen läßt, wenn man eine Auftrennung der Rückstände in ihre wesentlichen Bestandteile vornimmt.

Dies geschieht erfindungsgemäß wie folgt:

Man suspendiert den Rückstand in Wasser unter Bildung von je einer flüssigen wäßrigen und einer organischen Phase sowie einer aus dem Adsorptionsmittel bestehenden festen Phase. Dann isoliert man entweder 1) aus der erhaltenen Suspension zunächst das Adsorptionsmittel, bevor man die beiden flüssigen Phasen voneinander trennt, oder 2) man trennt von den erhaltenen drei Phasen zuerst die organische Phase ab und isoliert dann das Adsorptionsmittel von der verbleibenden wäßrigen Phase. Anschließend wird 3) die nach 1) oder 2) in Form einer verdünnten Phosphorsäure gewonnene wäßrige Phase in die extraktive Reinigung der Rohphosphorsäure recycliert und die aus dem schwermetallhaltigen Dialkyldithiophosphorsäureester bestehende organische Phase wird entweder a) direkt als solche weiterverwendet, z.B. in einem Metallhüttenbetrieb oder b) durch Thermolyse oder Oxidation in ein Schwermetallkonzentrat überführt oder c) durch Vermischen mit wenig pulverförmigen Feststoffen in ein leicht zu handhabendes festes Produkt umgesetzt.

Schließlich wird 4) das nach 1) oder 2) isolierte Adsorptionsmittel entweder deponiert, da es nunmehr ökologisch unbedenklich ist, oder in die extraktive Reinigung der Rohphosphorsäure recycliert.

Die oxidative Aufarbeitung der organischen Phase kann mit jedem genügend starken Oxidationsmittel ausgeführt werden, welches in der Lage ist, den Schwermetall-Thioester-Komplex zu zerstören, z.B. mit Salpetersäure, Chlor, Hypochlorit, Chlorat oder auch Peroxoverbindungen.

Im Folgenden sollen der Grundgedanke und die Vorteile des erfindungsgemäßen Verfahrens noch einmal zusammengefaßt werden:

Die bei der Schwermetall-Entfernung aus Phosphorsäuren mittels Dialkyldithiophosphorsäureester und Adsorptionsmittel anfallenden schwermetallhaltigen Filterschlämme sollen in einen ökologisch unbedenklichen Feststoff sowie ein Schwermetallkonzentrat aufgearbeitet werden. Dabei kann die Hauptmenge des ursprünglichen Schwermetallkuchens als unbedenkliches Deponieprodukt oder als recyclierbarer Rohstoff erhalten und abgetrennt werden. Das Schwermetallkonzentrat kann aufgrund seines hohen Metallgehalts als Rohstoff in der metallerzeugenden Industrie eingesetzt werden.

In den nachfolgenden Beispielen soll die Erfindung näher erläutert werden. Alle % Angaben sind als Gewichts% zu verstehen.

Beispiel 1 (Phasentrennung)

200 g eines aus einer Entmetallierung von Phosphorsäure unter Verwendung von Perlit stammenden Filterkuchens werden mit 200 g Wasser bei 50°C 2 Std. lang intensiv verrührt. Anschließend läßt man absitzen. Es bildet sich ein Dreiphasengemisch aus oberer schwarzer, organischer Phase, einer mittleren wäßrigen Phase sowie einer festen Phase.

Die organische Phase wird abgeschöpft (24,6 g) und das Gemisch aus verdünnter wäßriger Phosphorsäure und Perlit durch Filtration getrennt. Man erhält 112 g Filterkuchen (45 % Haftwasser) sowie 262 g wäßrige Phase mit 4,3 % $P_2O_5$.

Die abgeschöpfte organische Phase enthält 3,3 % Cu sowie 2,4 % Cd. Der Filterkuchen ist praktisch schwermetallfrei und kann erneut zur Entcadmierung von Phosphorsäure verwendet werden. Das Dünnphosphorsäure-Filtrat kann in die Rohphosphorsäure zurückgeführt werden.

Beispiel 2 (Oxidation von organischer Phase)

20 g einer nach Beispiel 1 abgeschiedenen schwermetallhaltigen Phosphorsäurethioester-Phase (3,3 % Cu; 2,4 % Cd) werden mit 10 g 20 %iger Salpetersäure eine Stunde intensiv bei Raumtemperatur gerührt.

Es entsteht ein Zweiphasengemisch, bestehend aus 17,5 g einer schwermetallfreien organischen Phase sowie 12,3 g einer wäßrigen Phase, in der die gesamten Schwermetalle gelöst sind (5,3 % Cu; 3,9 % Cd).

Durch Ausfällen mit Lauge kann daraus ein Schwermetall-Hydroxid-Konzentrat gewonnen werden.

Beispiel 3 (Thermolyse von organischer Phase)

20 g der organischen Phase, die auch im Beispiel 2 eingesetzt wurde, werden in einer Schale im Muffelofen langsam auf 400°C aufgeheizt und zwei Stunden bei dieser Temperatur belassen.

Es bleibt ein Rückstand von 3,8 g, der 17,4 % Cu und 12,5 % Cd enthält.

Beispiel 4 (Verfestigung von organischer Phase)

20 g der organischen Phase aus Beispiel 2 werden mit verschiedenen pulverförmigen Feststoffen verknetet, bis eine krümelig feste Masse entsteht. Folgende Stoffe und Mengen wurden eingesetzt:

| Stoff | Menge | Gehalt im Endprodukt | |
|---|---|---|---|
| | | % Cu | % Cd |
| Kalkhydrat | 37,4 g | 1,1 | 0,8 |
| Pulver-Aktivkohle | 8,8 g | 2,3 | 1,7 |
| Perlit | 9,1 g | 2,3 | 1,6 |

Auf ähnliche Weise kann eine schwermetallhaltige, organische Phase verfestigt werden, die bei der Extraktion von Phosphorsäure mit reinem Dialkyldithiophosphorsäureester entsteht.

EP 0 206 022 B1

**Patentansprüche**

1. Verfahren zur Aufarbeitung von schwermetallhaltigen Rückständen, welche bei der extraktiven Reinigung von Rohphosphorsäuren mit Dialkyldithiophosphorsäureestern in Verbindung mit Adsorptionsmitteln anfallen und die im wesentlichen aus diesen Estern und Adsorptionsmitteln bestehen, <u>dadurch gekennzeichnet</u>, daß man den Rückstand unter Bildung von je einer flüssigen wäßrigen und einer organischen Phase sowie einer aus dem Adsorptionsmittel bestehenden festen Phase in Wasser suspendiert und dann entweder

    1) aus der erhaltenen Suspension zunächst das Adsorptionsmittel von den beiden flüssigen Phasen isoliert und dann die beiden flüssigen Phasen voneinander trennt oder

    2) von den erhaltenen drei Phasen zunächst die organische Phase abtrennt und dann das Adsorptionsmittel von der verbleibenden wäßrigen Phase isoliert und man

    3) die nach 1) oder 2) in Form einer verdünnten Phosphorsäure gewonnene wäßrige Phase in die extraktive Reinigung der Rohphosphorsäure recycliert und die aus dem schwermetallhaltigen Dialkyldithiophosphorsäureester bestehende organische Phase entweder

        a) direkt weiterverwendet oder

        b) durch Thermolyse oder Oxidation in ein Schwermetallkonzentrat überführt oder

        c) durch Vermischen mit wenig pulverförmigen Feststoffen in ein festes Produkt umsetzt, und daß man

    4) das in 1) oder 2) isolierte Adsorptionsmittel entweder deponiert oder in die extraktive Reinigung der Rohphosphorsäure recycliert.

**Claims**

1. A process for working up heavy-metal-containing residues produced on extractive purification of crude phosphoric acids using dialkyl dithiophosphates in combination with adsorbents and essentially comprising these esters and adsorbents, which comprises suspending the residue in water, with formation of a liquid aqueous phase and an organic phase and a solid phase comprising the adsorbent, and then either

    1) first isolating the adsorbent from the two liquid phases in the resultant suspension and then separating the two liquid phases from one another, or

    2) first separating the organic phase from the three phases obtained and then isolating the adsorbent from the aqueous phase which remains, and

    3) recycling the aqueous phase obtained from 1) or 2) in the form of a dilute phosphoric acid into the extractive purification of the crude phosphoric acid, and subjecting the organic phase comprising the heavy-metal-containing dialkyl dithiophosphate to

        a) further use as it is or

        b) conversion into a heavy-metal concentrate by thermolysis or oxidation or

        c) conversion into a solid product by mixing with non-pulverulent solids, and

    4) dumping the adsorbent isolated in 1) or 2) in a landfill site or recycling it into the extractive purification of the crude phosphoric acid.

**Revendications**

1. Procédé pour le traitement de résidus contenant des métaux lourds qui se forment dans la purification d'acides phosphoriques bruts par extraction par des dithiophosphates de dialkyles en liaison avec des agents adsorbants et qui consistent essentiellement en ces esters et les agents adsorbants, caractérisé en ce que l'on met le résidu en suspension dans l'eau avec formation d'une phase liquide aqueuse et d'une phase liquide organique et d'une phase solide consistant en agent adsorbant et ensuite ou bien

    1) on isole d'abord l'agent adsorbant des deux phases liquides de la suspension obtenue et on sépare ensuite les deux phases liquides l'une de l'autre, ou bien

    2) on sépare d'abord la phase organique des trois phases obtenues et on isole ensuite l'agent adsorbant de la phase aqueuse restante et

    3) on recycle la phase aqueuse obtenue selon 1) ou 2) sous forme d'un acide phosphorique dilué dans la purification par extraction de l'acide phosphorique brut et, ou bien

        a) on utilise ultérieurement directement la phase organique consistant en le dithiophosphate de dialkyle contenant les métaux lourds, ou bien

        b) on la transforme par thermolyse ou oxydation en un concentré de métaux lourds, ou bien

c) on la transforme par mélange avec des matières peu pulvérulentes en un produit solide, et en ce que

4) ou bien on rejette l'agent adsorbant isolé en 1) ou 2) ou bien on le recycle dans la purification de l'acide phosphorique brut par extraction.